# EUROPEAN PATENT APPLICATION

(11) **EP 2 615 837 A1**
(43) Date of publication of application: **17.07.2013**
(21) Application number: 11823480.6
(22) Date of filing: 26.08.2011
(51) Int. Cl.: H04N 13/02, G03B 35/08, H04N 5/225

(54) **PHOTOGRAPHING DEVICE AND PHOTOGRAPHING METHOD**

(30) Priority: 08.09.2010 JP 2010200417
(71) Applicant: NEC Corporation, Tokyo 108-8001 (JP)
(72) Inventor: KOBAYASHI, Jun, Tokyo 108-8001 (JP)
(74) Representative: Vossius & Partner
(86) International application number: PCT/JP2011/069971
(87) International publication number: WO 2012/033005

(57) **Abstract**

In a photographing device including a plurality of photographing means, a failure is liable to arise in photographing an object, therefore, a photographing device according to an exemplary aspect of the invention includes a plurality of photographing means; a photographing control means to which the plurality of photographing means are connected; and an output control means connected to the photographing control means; wherein the photographing control means includes an image information extraction means obtaining photographed images from the photographing means and extracting image information from each of the photographed images, an image information processing means detecting a difference between multiple pieces of the image information, and a comparison means making a comparison in size between the difference and a predetermined threshold value, the output control means outputs a warning signal if the comparison means determines that the size of the difference exceeds the size of the predetermined threshold value.

## Description

### TECHNICAL FIELD

The present invention relates to photographing devices and photographing methods, in particular, to a photographing device and a photographing method including a plurality of photographing means.

### BACKGROUND ART

In recent years, for the purpose of enabling stereoscopic photographing of an object and so on, photographing devices using a plurality of photographing means have been developed. An example of such photographing devices is disclosed in the patent literature 1.

The photographing device disclosed in the patent literature 1 includes a first image sensor, a second image sensor spaced apart from the first image sensor, and a diversity combine module to combine image data from the first and second image sensors. It further includes an image processing module configured to process combined image data from the diversity combine module. And it obtains a maximum cross correlation between vertical mapping data of the two image sensors, and if the maximum cross correlation is not less than a threshold, a stereo image is composed. At this time, a vertical mismatch of two view images is calculated and compensated.

Patent Literature 1: Japanese Unexamined Patent Application Publication (Translation of PCT application) No. 2009- 545081 (paragraphs "0004", "0043", "0044")

### DISCLOSURE OF INVENTION

### PROBLEM TO BE SOLVED BY THE INVENTION

In photographing devices including a plurality of photographing means such as the related photographing device mentioned above, there has been a problem that a failure is liable to arise in photographing an object because of increasing a possibility that a part of a plurality of photographing means is interrupted by foreign articles such as fingers of a photographer other than the object. Furthermore, if a target to be photographed is being monitored by picture images from the plurality of photographing means, there has been a problem that the photographer is hard to notice the irruption of foreign articles because, even if a foreign article intrudes into a part of photographing area, a monitoring picture image can be obtained by a picture image from the other photographing means.

For example, in a camera device for stereographic photography using two camera elements, if a three-dimensional (3 dimension: 3D) liquid crystal display device is used for a monitor display, it becomes possible to display three-dimensionally a preview display presented to the photographer in photographing. At that time, if a foreign article such as a finger of a photographer intrudes into a photographing area of one camera element, in other words, even if a photographer gets his finger caught in a lens of one camera element, it is possible to obtain a preview image normally by the other camera element. Therefore, since the photographer can visually recognize the preview image which is normally obtained by one of his eyes, it is difficult to notice that his finger is gotten caught from the preview image. As a result, although taking a photograph is just continued without noticing that his finger is gotten caught, a failure arises in photographing because a normal image cannot be obtained.

Thus, in the related photographing device including a plurality of the photographing means, there has been a problem that a failure is liable to arise in photographing an object.

The object of the present invention is to provide a photographing device and a photographing method which solve the problem mentioned above that in a photographing device including a plurality of photographing means, a failure is liable to arise in photographing an object.

### MEANS FOR SOLVING A PROBLEM

A photographing device according to an exemplary aspect of the invention includes a plurality of photographing means; a photographing control means to which the plurality of photographing means are connected; and an output control means connected to the photographing control means; wherein the photographing control means includes an image information extraction means obtaining photographed images from the photographing means and extracting image information from each of the photographed images, an image information processing means detecting a difference between multiple pieces of the image information, and a comparison means making a comparison in size between the difference and a predetermined threshold value, the output control means outputs a warning signal if the comparison means determines that the size of the difference exceeds the size of the predetermined threshold value.

A photographing method according to an exemplary aspect of the invention includes the steps of: obtaining a plurality of photographed images; extracting image information from each of the photographed images; detecting a difference between multiple pieces of the image information; making a comparison in size between the difference and a predetermined threshold value; and outputting a warning signal if the size of the difference exceeding the size of the predetermined threshold value.

### EFFECT OF THE INVENTION

According to the photographing device and the photographing method including a plurality of photographing means by the present invention, it is possible to prevent a failure from arising in photographing an object.

### BRIEF DESCRIPTION OF THE DRAWINGS

FIG. 1 is a block diagram showing a configuration of a photographing device in accordance with the first exemplary embodiment of the present invention.
FIG. 2 is a block diagram showing a configuration of a photographing device in accordance with the second exemplary embodiment of the present invention.
FIG. 3 is a flowchart showing operations of a photographing device in accordance with the second exemplary embodiment of the present invention.
FIG. 4 is a flowchart showing the process for displaying a preview image converted into a 3D image in a photographing device in accordance with the second exemplary embodiment of the present invention.
FIG. 5 is a flowchart showing the process for comparing a difference between image information and a predetermined threshold value in a photographing device in accordance with the second exemplary embodiment of the present invention.
FIG. 6 is a block diagram showing a configuration of a photographing device in accordance with the third exemplary embodiment of the present invention.

### DESCRIPTION OF EMBODIMENTS

The exemplary embodiments of the present invention will be described with reference to drawings below.

### [The first exemplary embodiment]

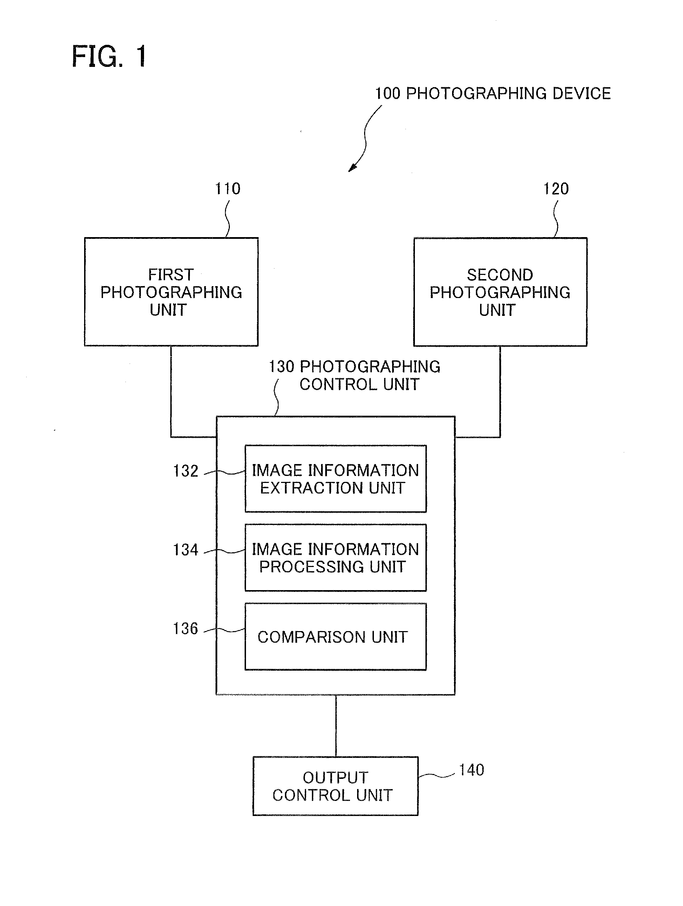

FIG. 1 is a block diagram showing a configuration of a photographing device 100 in accordance with the first exemplary embodiment of the present invention. The photographing device 100 includes a first photographing means 110 and a second photographing means 120 which compose a plurality of photographing means, a photographing control means 130 to which these photographing means are connected, and an output control means 140 which is connected to the photographing control means 130. In the present exemplary embodiment, a case is explained where the number of the photographing means is two, but the number of the photographing means is not particularly limited to this.

The photographing control means 130 includes an image information extraction means 132 which obtains photographed images from the first photographing means 110 and the second photographing means 120 and extracts image information from each of these photographed images. Further, the photographing control means 130 includes an image information processing means 134 which detects a difference between image information of the extracted two images, and a comparison means 136 which makes a comparison in size between the detected difference and a predetermined threshold value. Here, the output control means 140 outputs a warning signal if the comparison means 136 determines that the size of the detected difference exceeds the size of the predetermined threshold value.

By adopting such configuration, in the photographing device 100 in the present exemplary embodiment, it is possible to detect a case where a remarkable difference arises between a photographed image which the first photographing means 110 obtains and a photographed image which the second photographing means 120 obtains. Therefore, if a foreign article other than an object, for example, a finger of a photographer, intrudes into a photographing area of one of the photographing means, the photographing can be stopped on the basis of a warning. As a result, according to the photographing device in the present exemplary embodiment, it is possible to prevent a failure from arising in photographing an object, for example, a reflection of a shadow of a finger and so on into a photographed image.

Also, if the comparison means 136 determines that the size of the detected difference exceeds the size of the predetermined threshold value, the photographing control means 130 may continue photographing by switching to a 2D photographing mode. In this case, one image is discarded among two images extracted by the photographing control means 130 which becomes darker due to a reflection of a foreign article. At this time, for example, the image information extraction means 132 extracts each brightness of two images extracted by the photographing control means 130 and treats only brighter image as a processing target.

By adopting such configuration, if a foreign article other than an object intrudes into a photographing area of one of the photographing means, it becomes possible to switch to a mode in which photography can be normally performed.

### [The second exemplary embodiment]

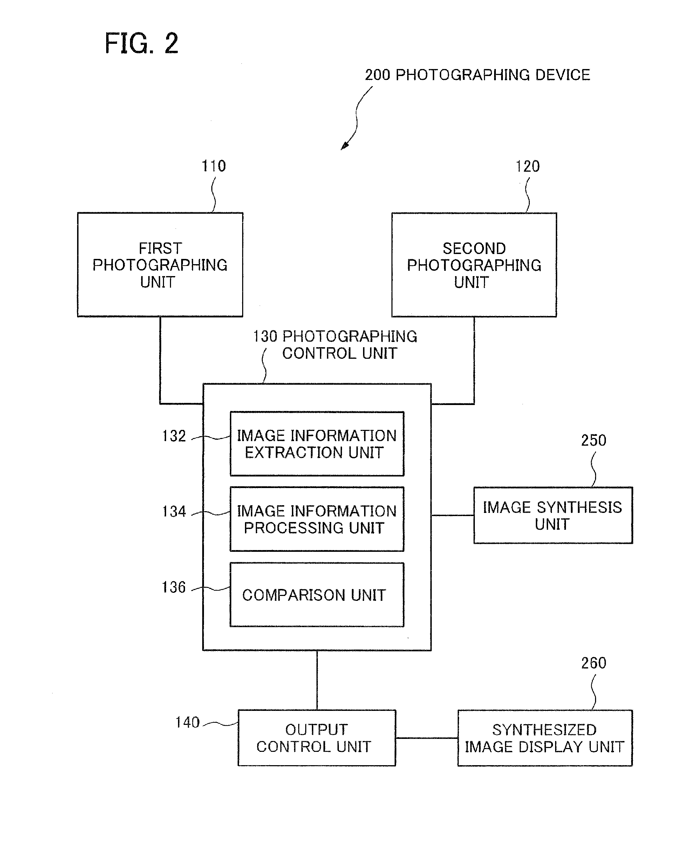

Next, the second exemplary embodiment of the present invention will be described. FIG. 2 is a block diagram showing a configuration of a photographing device 200 in accordance with the second exemplary embodiment of the present invention. The photographing device 200 includes the first photographing means 110, the second photographing means 120, the photographing control means 130 to which these photographing means are connected, and the output control means 140 which is connected to the photographing control means 130. In the present exemplary embodiment, a stereoscopic photographing device is described which enables stereoscopic (also referred to as "three dimensions" or "3D", below) photographing of an object with the number of the photographing means equal to two, as an example, but the number of the photographing means is not particularly limited to this.

The photographing control means 130 includes the image information extraction means 132, the image information processing means 134, and the comparison means 136. The output control means 140 outputs a warning signal if the comparison means 136 determines that the size of the detected difference exceeds the size of the predetermined threshold value. The configuration above is the same as that of the photographing device 100 in accordance with the first exemplary embodiment.

The photographing device 200 according to the present exemplary embodiment further includes an image synthesis means 250 which is connected to the photographing control means 130, and a synthesized image display means 260 which is connected to the output control means 140. The image synthesis means 250 synthesizes each image which the first photographing means 110 and the second photographing means 120 obtain respectively and generates a synthesized image of a stereoscopic image (three-dimensional image). The synthesized image display means 260 displays the synthesized image and displays warning information when a warning signal is received from the output control means 140.

Here, the first photographing means 110 and the second photographing means 120 can be configured for including a camera element and a camera element control means, respectively. As image information extracted from the photographed image, color information can be available. As the predetermined threshold value, a numerical value can be used which is based on an average difference value arising from only a parallax difference between the first photographing means 110 and the second photographing means 120.

By adopting such configuration, in the photographing device 200 in the present exemplary embodiment, even if stereoscopic photographing is performed with monitoring a three-dimensional image displayed on the synthesized image display means 260, it is possible to prevent a failure from arising in photographing an object. For example, in a case where a part of the photographing means is interrupted by a foreign article other than an object such as a finger of a photographer, the difference between the image information of the two images increases. At this time, the output control means 140 outputs a warning signal, and the synthesized image display means 260 displays warning information based on the warning signal.

Therefore, even though it is difficult to notice an intrusion of a foreign article such as a finger caught in a lens by means of monitoring the synthesized image displayed stereoscopically, the photographer is able to recognize the intrusion of the foreign article by the warning information displayed on the synthesized image display means 260. Since the photographer can stop photographing on the basis of the warning information, it is possible to prevent a failure from arising in photographing an object.

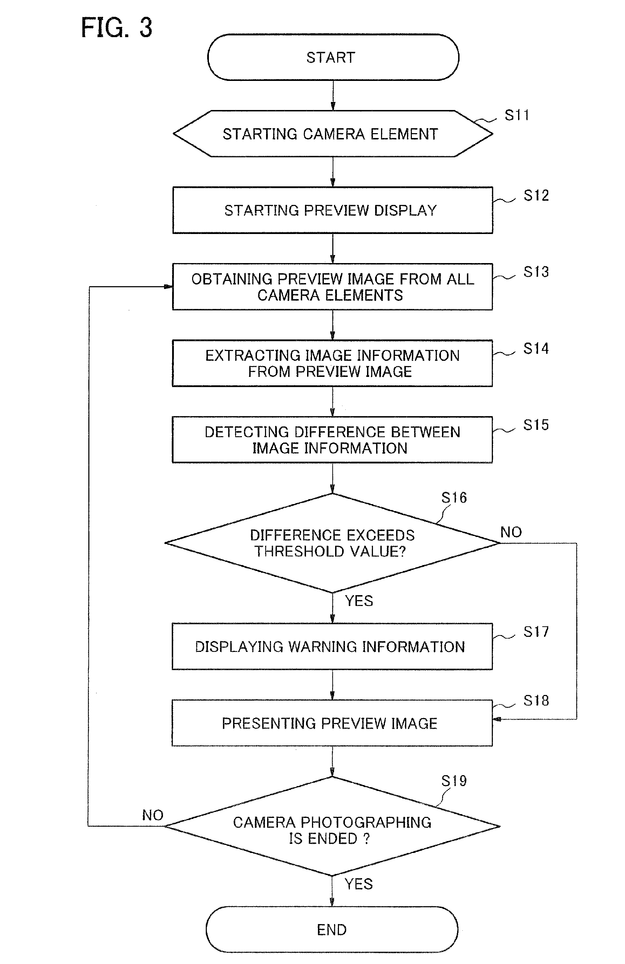

Next, the operation of the photographing device 200 in accordance with the present exemplary embodiment will be described. FIG. 3 is a flowchart showing the operations of the photographing device 200 of the present exemplary embodiment. First, when a photographer (a user) performs an operation to start a camera device as the photographing device 200, the camera device starts a plurality of camera elements mounted in the camera device (the first photographing means 110 and the second photographing means 120 in the example shown in FIG. 2) by means of the camera element control means (step S11). Each of these camera elements is controlled by the camera element control means.

While the camera elements are running, the photographing control means 130 periodically obtains photographed images (preview images) of the two camera elements from the camera element control means respectively. The image synthesis means 250 performs a three-dimensional synthesis processing for the two preview images obtained from the photographing control means 130, and the synthesized image display means 260 displays the preview image converted into a 3D image (step S12).

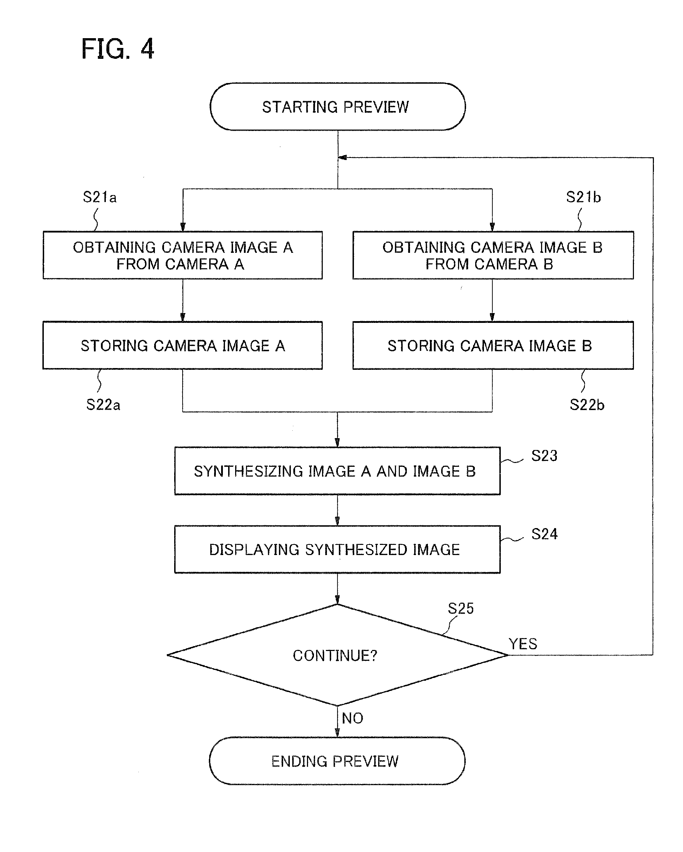

Here, displaying the preview image converted into a 3D image will be described using FIG. 4. FIG. 4 is a flowchart showing the process for displaying the preview image converted into a 3D image. In FIG. 4, a case will be described in which a camera A and a camera B are used as camera elements which compose the first photographing means 110 and the second photographing means 120 respectively.

First, the photographing control means 130 obtains a camera image A and a camera image B from the camera A and the camera B respectively (steps S21a and S21 b) and stores them in a memory installed in the photographing device 200, for example (steps S22a and S22b).

Next, the image synthesis means 250 performs a synthesis process for the camera image A and the camera image B. At this time, the image synthesis means 250 performs image synthesis which corresponds to a 3D display system of the synthesized image display means 260 (step S23). The 3D display system is not limited in particular. A parallax barrier system or a shutter system can be used, for example. Here, in the parallax barrier system, two images in which a parallax arises are cut off in a vertical direction and are arranged alternately. A liquid crystal element used for this system is provided with a barrier so that an image for a right eye may meet the right eye only and an image for a left eye may meet the left eye only. As a result, it is possible to present different images in the directions toward left and right eyes respectively, and stereoscopic vision can be made possible. Also, the shutter system is, for example, in case utilizing glasses, a system to realize stereoscopic vision by alternately displaying an image for a left eye and one for a right eye on the liquid crystal element, and by opening and closing the shutters for the right eye and the left eye of the glasses synchronizing with displaying the image.

The synthesized image display means 260 displays the obtained synthesized image (step S24). If it continues displaying the preview image, the process returns to the step for obtaining images from the cameras (step S25/YES). If it becomes unnecessary to display the preview image, the process ends (step S25/NO).

Referring to FIG. 3 again, the photographing control means 130 obtains photographed images (preview images) from all of the active camera elements (step S13). The image information extraction means 132 in the photographing control means 130 extracts image information from each of the obtained preview images (step S14), and the image information processing means 134 detects the difference in the image information on each of the extracted images (step S15). And then, the comparison means 136 makes a comparison in size between the detected difference and the predetermined threshold value (step S16). Here, as the predetermined threshold value, a numerical value can be used which is based on an average difference value arising from only a parallax difference, for example, an average difference value with a margin can be used.

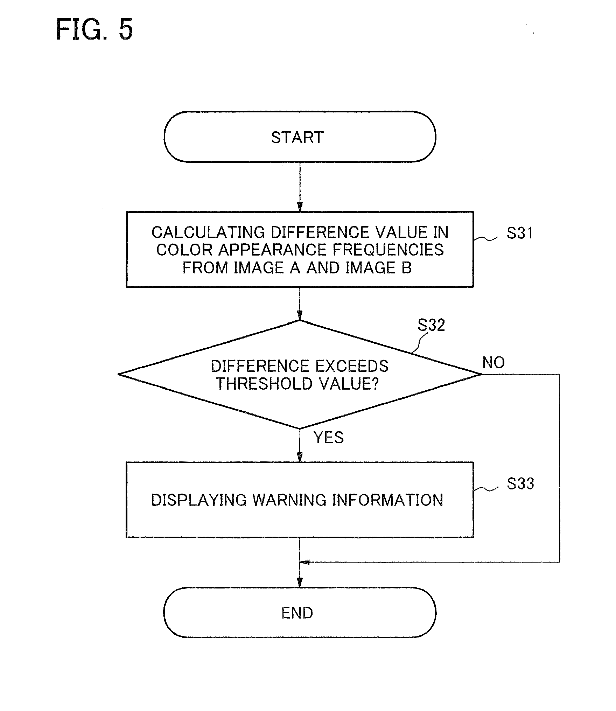

For making a comparison in size between the difference in the image information and the predetermined threshold value, it is possible to use a method for comparing the image information by applying a parallax interpolation method, and so on, but the processing method is not limited to the above in particular. Here, a processing method using color information will be described by use of FIG. 5.

FIG. 5 is a flowchart showing the process for comparing a difference between image information and a predetermined threshold value. First, the image information extraction means 132 extracts color appearance frequencies in each image from the obtained preview image A and image B. Next, the image information processing means 134 makes a histogram for the extracted color appearance frequencies in each image respectively and calculates a numerical value of the difference in them (step S31).

Here, for example, if both of the image A and the image B are normally photographed, the photographed objects in themselves are almost the same even though there are a few parallax differences. Therefore, the color information appearing in the image A and the image B becomes almost the same. In contrast, if a shadow of a finger and so on is reflected into the image A only, a part in which a finger and so on is caught becomes black, for example. On the other hand, as for the corresponding part of the image B, the color information of the object can be obtained from the normal photographed image. Therefore, a large difference arises in the color information appearing in the image A and the image B. From which, it is possible to determine the presence or absence of an intrusion of a foreign article such as a finger catching by judging whether the difference value in the color information between the image A and the image B is larger or smaller than the threshold value.

From this, the comparison means 136 makes a comparison in size between the detected difference and the predetermined threshold value (step S32 in FIG. 5, step S16 in FIG. 3). If the comparison means 136 determines that the size of the detected difference exceeds the size of the predetermined threshold value (step S32/YES in FIG. 5, step S16/YES in FIG. 3), the output control means 140 outputs the warning signal and the synthesized image display means 260 displays the warning information (step S33 in FIG. 5, step S17 in FIG. 3). If the comparison means 136 determines that the size of the detected difference does not exceed the size of the predetermined threshold value (step S32/NO in FIG. 5, step S16/NO in FIG. 3), the output control means 140 does not output the warning signal and the synthesized image display means 260 does not display the warning information.

In the present exemplary embodiment, although the synthesized image display means 260 displays the warning information on the basis of the warning signal from the output control means 140, not limited to this, it is also available to generate a warning sound or vibration on the basis of the warning signal.

The synthesized image display means 260 displays the preview image at this time (step S18 in FIG. 3). At that time, if a foreign article such as a finger catching intrudes into the photographing area, the warning information is displayed on the synthesized image display means 260 along with the preview image. Therefore, since the photographer can stop the photographing on the basis of this warning information, it is possible to prevent a failure from arising in photographing an object.

After that, the photographing control means 130 determines the presence or absence of the instructions to end the camera photographing process (step S19). If there are no instructions to end it, the process returns to the step S13 and the process is performed for obtaining the photographed images (preview images) from all camera elements (step S19/NO). If there are the instructions to end it, the operation of the photographing device 200 is ended (step S19/YES).

### [The third exemplary embodiment]

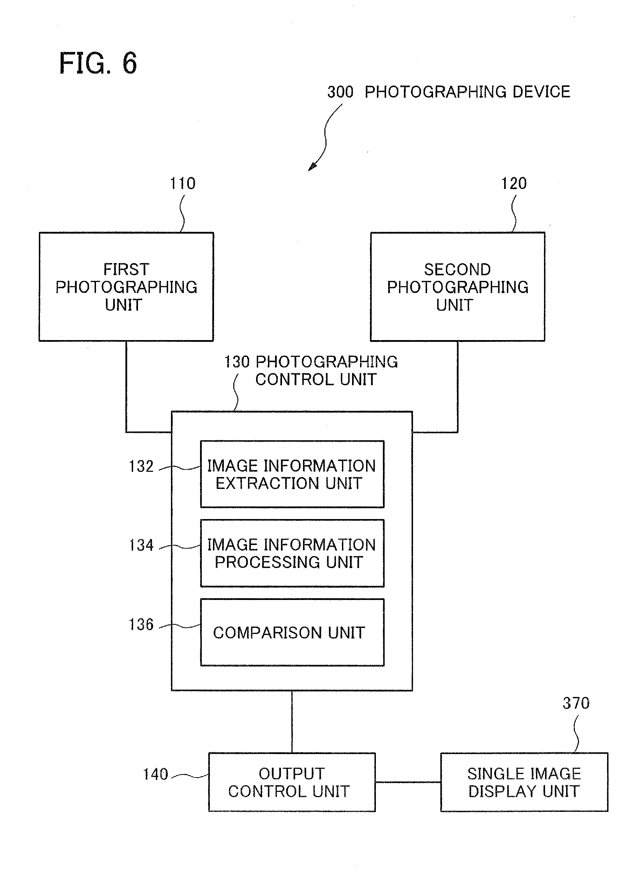

Next, the third exemplary embodiment of the present invention will be described. FIG. 6 is a block diagram showing a configuration of a photographing device 300 in accordance with the third exemplary embodiment of the present invention. The photographing device 300 includes the first photographing means 110, the second photographing means 120, the photographing control means 130 to which these photographing means are connected, and the output control means 140 which is connected to the photographing control means 130. In the present exemplary embodiment, a case is described where the number of the photographing means is equal to two, as an example, but the number of the photographing means is not particularly limited to this.

In the photographing device 300 according to the present exemplary embodiment, one of a plurality of photographing means, for example, the first photographing means 110 performs planar (also referred to as "two dimensions" or "2D") photographing of an object. At least one of the other photographing means, for example, the second photographing means 120 is used for detecting an intrusion of a foreign article other than an object into a photographing area of the first photographing means 110 for photographing a planar image. As a foreign article other than an object, a finger of a photographer and so on is assumed, for example.

The photographing control means 130 includes the image information extraction means 132, the image information processing means 134, and the comparison means 136. The output control means 140 outputs a warning signal if the comparison means 136 determines that the size of the detected difference exceeds the size of the predetermined threshold value. The configuration and the operation above are the same as those of the photographing device 100 in accordance with the first exemplary embodiment.

The photographing device 300 includes a single image display means 370 which is connected to the output control means 140, and the single image display means 370 displays a planar image which the first photographing means 110 obtains. If the warning signal is received from the output control means 140, the single image display means 370 displays warning information together.

By adopting such configuration, in the photographing device 300 in the present exemplary embodiment, even if a planar image is photographed using a single photographing means (a camera), it is possible to prevent a failure from arising in photographing an object.

That is to say, even though the planar image is photographed, if an area of a finger catching is narrow and a display only in the edge portion of a preview image and so on is slightly disturbed, a finger catching can be hard to be noticed. However, according to the photographing device 300 of the present exemplary embodiment, it is possible to use the second photographing means in order to detect the intrusion of a foreign article into the photographing area of the first photographing means for photographing a planar image. Therefore, if a finger catching and so on arises, the photographer can stop photographing beforehand on the basis of a warning display, and it is possible to prevent a failure from arising in photographing an object.

As mentioned above, in addition to warning when a warning signal is received from the output control means 140, it is possible to continue photographing by changing the photographing means for photographing a planar image from the first photographing means 110 into the second photographing means 120. Specifically, for example, it is possible to adopt the configuration for performing the following operation. First, the image information extraction means 132 extracts the brightness of the two images extracted by the photographing control means 130. At that time, if the image by the second photographing means 120 is brighter than the image by the first photographing means 110 exceeding the predetermined threshold value, the photographing is continued with the photographing control means 130 changing the photographing means for photographing a planar image from the first photographing means 110 into the second photographing means 120. Conversely, if the image by the first photographing means 110 is brighter than the image by the second photographing means 120 exceeding the predetermined threshold value, the photographing is continued without any change.

By adopting such configuration, if a finger catching and so on arises, the photographer can change the photographing means and continue photographing normally, and it is possible to prevent a failure from arising in photographing an object.

In the above-mentioned exemplary embodiments, it has been described that a stereoscopic photographing is performed in the photographing device 200 according to the second exemplary embodiment, and a planar photographing is performed in the photographing device 300 according to the third exemplary embodiment. However, not limited to this, the present invention is also available for using one photographing device switching between the stereoscopic photographing and the planar photographing.

At that time, with respect to a numerical value of the threshold value which is compared with the difference between multiple pieces of image information, it is possible to use a different numerical value at each time of stereoscopic photographing and planar photographing. For example, as the threshold value at the time of stereoscopic photographing, a numerical value is adopted which is based on an average difference value arising from only a parallax difference between a plurality of photographing means. On the other hand, since only a photographed image from a single photographing means is used at the time of planar photographing, the influence of the finger catching increases. Accordingly, it is possible to set a numerical value smaller than the threshold value at the time of stereoscopic photographing for a threshold value. In this case, even if a warning is displayed at the time of planar photographing, in cases where the influence of the finger catching and so on is smaller than that of the parallax difference, the warning is not displayed anymore if changed into the stereoscopic photographing. From which, the photographer can find the degree of the finger catching and so on.

The present invention is not limited to the above-mentioned exemplary embodiments and can be variously modified within the scope of the invention described in the claims. It goes without saying that these modifications are also included in the scope of the present invention.

This application is based upon and claims the benefit of priority from Japanese patent application No. 2010-200417, filed on September 8, 2010, the disclosure of which is incorporated herein in its entirety by reference.

**DESCRIPTION OF THE CODES**

| | |
|---|---|
| 100, 200, 300 | photographing device |
| 110 | first photographing means |
| 120 | second photographing means |
| 130 | photographing control means |
| 132 | image information extraction means |
| 134 | image information processing means |
| 136 | comparison means |
| 140 | output control means |
| 250 | image synthesis means |
| 260 | synthesized image display means |
| 370 | single image display means |

## Claims

1. A photographing device, comprising:
a plurality of photographing means;
a photographing control means to which the plurality of photographing means are connected; and
an output control means connected to the photographing control means;
wherein the photographing control means comprises an image information extraction means obtaining photographed images from the photographing means and extracting image information from each of the photographed images, an image information processing means detecting a difference between multiple pieces of the image information, and a comparison means making a comparison in size between the difference and a predetermined threshold value,
the output control means outputs a warning signal if the comparison means determines that the size of the difference exceeds the size of the predetermined threshold value.

2. The photographing device according to claim 1, further comprising:
an image synthesis means connected to the photographing control means; and
a synthesized image display means connected to the output control means;
wherein the image synthesis means synthesizes each image which the plurality of photographing means obtains, and generates a synthesized image; and
the synthesized image display means displays the synthesized image and displays warning information when the warning signal is received from the output control means.

3. The photographing device according to claim 1, further comprising:
an image synthesis means connected to the photographing control means; and
a synthesized image display means connected to the output control means;
wherein the image synthesis means synthesizes each image which the plurality of photographing means obtains, and generates a synthesized image;
the synthesized image display means displays the synthesized image; and
the photographing control means photographs changing the photographing means to be used when the output control means outputs the warning signal.

4. The photographing device according to claim 1, further comprising a single image display means connected to the output control means;
wherein the single image display means displays one image obtained by one photographing means included in the plurality of photographing means, and displays warning information together when the warning signal is receives from the output control means.

5. The photographing device according to claim 1, further comprising a single image display means connected to the output control means;
wherein the single image display means displays one image obtained by one photographing means included in the plurality of photographing means; and
the photographing control means photographs changing the photographing means to be used when the output control means outputs the warning signal.

6. The photographing device according to claim 2 or 3,
wherein the synthesized image is a stereoscopic image.

7. The photographing device according to claim 4 or 5,
wherein the one image is a planar image.

8. The photographing device according to any one of claims 1, 2, 3, 4, 5, 6, and 7,
wherein the image information is color information.

9. The photographing device according to any one of claims 1, 2, 3, 4, 5, 6, 7, and 8,
wherein the predetermined threshold value is a numerical value which is based on an average difference value arising from only a parallax difference.

10. A photographing method, comprising the steps of:
obtaining a plurality of photographed images;
extracting image information from each of the photographed images;
detecting a difference between multiple pieces of the image information;
making a comparison in size between the difference and a predetermined threshold value; and
outputting a warning signal if the size of the difference exceeding the size of the predetermined threshold value.

11. The photographing method according to claim 10, further comprising:
generating a synthesized image by synthesizing the plurality of photographed images; and
displaying the synthesized image and warning information based on the warning signal.

12. The photographing method according to claim 10, further comprising:
displaying one photographed image among the plurality of photographed images and warning information based on the warning signal.

13. The photographing method according to claim 10, wherein
in the step of outputting the warning signal, photographing and changing a photographing means to be used.
